# EUROPÄISCHE PATENTSCHRIFT

(11) **EP 1 410 932 B1**
(45) Veröffentlichungstag und Bekanntmachung des Hinweises auf die Patenterteilung: **08.08.2007**
(21) Anmeldenummer: 03023685.5
(22) Anmeldetag: 17.10.2003
(51) Int. Cl.: B60H 1/34, F24F 13/08

(54) **Luftdüse mit Befestigungsvorrichtung**
Air-nozzle with fixing device
Buse d'air avec un mécanisme de fixation

(30) Priorität: 18.10.2002 DE 10248740
(43) Veröffentlichungstag der Anmeldung: 21.04.2004
(73) Patentinhaber: AURORA Konrad G. Schulz GmbH & Co. KG, 69427 Mudau (DE)
(72) Erfinder: Banschbach, Thomas, 74706 Osterburken (DE)
(74) Vertreter: Baronetzky, Klaus

(56) Entgegenhaltungen:
- DE-A- 2 347 541
- DE-A- 19 705 283
- US-A- 3 648 592

## Beschreibung

Die Erfindung betrifft eine Rund-Luftdüse, gemäß dem Oberbegriff von Anspruch 1.

Eine derartige Luftdüse ist aus der DE-A 101 11 255 bekannt. Diese Düse weist eine Lagergehäuse auf, in dem eine kalottenförmige Innendüse gelagert ist. Für die Verstellung der Düse ist ein Schrittmotor vorgesehen, und die Verstellung soll entlang einer Zielkurve erfolgen. Nachteilig bei dieser Lösung ist die starre Fixierung auf eine Zielkurve. Demgegenüber ist die manuelle Verstellung von Düsen günstiger. Zudem ist eine manuell verstellbare Düse weniger störanfällig.

In diesem Zusammenhang sind seit langem Rund-Luftdüsen bekannt geworden, bei denen eine Innenring Lamellen trägt, und bei denen der Innenring drehbar gelagert ist. Die Lagerachse entspricht im Wesentlichen der Achse der Düse. Die Ablenkung des Luftstroms erfolgt bei derartigen Luftdüsen über die Stellung der Lamellen, die auch ein vollständiges Verschließen des Luftstroms ermöglichen.

Ein Beispiel für eine derartige Luftdüse ist die aus der DE-U 91 12 189 bekannte Düse. Diese Düse zeichnet sich dadurch aus, dass gezielt eine Betriebsbremse für die Lamellen vorgesehen ist, so dass die Lamellen nicht klappern. Diese Lösung stellt insofern eine Verbesserung der zuvor bekannten und seit langen Jahren eingesetzten Rund-Luftdüsen dar. Die Befestigung einer Luftdüse im Fahrzeuginnenraum soll einerseits eine rasche Montage ermöglichen, andererseits aber verhindern, dass die Düse sich versehentlich löst. In diesem Zusammenhang ist besonders zu berücksichtigen, dass auch der Fahrzeuginnenraum signifikanten Schwingungen unterworfen ist, die es erforderlich machen, die Befestigung sicher zu gestalten. Um dies zu erreichen, ist bei der beispielsweise aus der DE-A 196 22 908 bekannten Rund-Luftdüse eine verschraubung des Rahmens an der Lagerstelle vorgesehen. Derartige Lösungen eignen sich insbesondere für rechteckige Rahmen.

Aus ästhetischen Gründen, aus Platzgründen, aber auch aus Gründen der einfacheren Montage sind auch Rastverbindungen bekannt geworden, bei denen Rastzapfen das Blech oder die Kunststoffwand der Lagerstelle hintergreifen und für einen sicheren Halt der Düse sorgen sollen. Derartige Lösungen sind zwar preisgünstig herzustellen, nachdem die Rastzapfen auch als einstückige Kunststoffteile ausgebildet sein können. Bei dieser vorgeschlagenen Lösung besteht allerdings der Nachteil, dass die Rastzapfen zum Einen ungeschützt sind und zum Anderen eine begrenzte Rastkraft aufweisen. Die der Lagerstelle zugewandte Schrägfläche soll sich bei entsprechender Kraftaufbringung eindrücken, so dass die Düse bei Bedarf, beispielsweise zu Wartungszwecken, entnommen werden kann.

Bei der Entnahme brechen jedoch leicht die recht ungeschützten und sich abspreizenden Rastzapfen, so dass regelmässig davon Abstand genommen wird, die Düse zu reinigen, auch wenn die Lamellen bereits recht schwergängig sind.

Die Lamellen und ihre Gelenke liegen nämlich im Luftstrom, so dass sie Verschmutzungen verstärkt ausgesetzt sind.

Eine Anordnung, bei der die Lösung des oben beschriebenen Problems der geringen Belastbarkeit der Rastzapfen bei gleichzeitiger einfacher Montage bzw Demontage der Düse angestrebt wird, ist in der Druckschrift DE-A 23 47 541 beschrieben. Die Rastzapfen greifen in ihnen gegenüber angeordnete rechteckige Rastmulden ein. Die Rastzapfen weisen geneigte Seitenflächen auf, sodass sich sowohl beim Einsetzen der Düse in die die Rastmulden aufweisende Düsenlagerung als auch bei einer Relativdrehbewegung der Düse gegenüber der Düsenlagerung die Rastzapfen radial gegen eine nach außen wirkende Federkraft nach innen gedrückt werden. Die Zapfen rasten aus und die Düse kann entnommen werden.

Nachteilig bei dieser Lösung ist, dass die Rastzapfen durch eine radiale Kraft nach außen gedrückt werden, um sie in Eingriff mit den Rastmulden zu bringen. Bei starker Verschmutzung der Rastmulden oder der Lager, in denen sich die beweglichen Rastzapfen radial bewegen, kann eine Blockierung der Rastzapfen bei der Montage auftreten, sodass die Düse nicht in der Düsenlagerung einrasten kann. Auch ein Nachlassen der Federkraft bzw. ein Brechen oder Ausfallen des die nach außen wirkende radiale Kraft bereitstellenden elastischen Elements hätte die gleichen negativen Auswirkungen auf die Festigkeit der Verbindung von Düse und Düsenlager.

Um die Möglichkeit zu eröffnen, die Luftdüsen sicher warten zu können, werden häufig veschraubte Rund-Luftdüsen mit den vorstehend genannten Nachteilen eingesetzt.

Daher liegt der Erfindung die Aufgabe zu Grunde, eine Rund-Luftdüse gemäss dem Oberbegriff von Anspruch 1 zu schaffen, die besser zu handhaben ist, robuster ist, eine Sicherheit gegen das Herausfallen der geklemmten Luftdüse aus der vorgesehenen Lagerstelle und signifikante Vorteile in der Lebensdauer bietet.

Diese Aufgabe wird erfindungsgemäß durch Anspruch 1 gelöst. Vorteilhafte Weiterbildungen ergeben sich aus den Unteransprüchen.

Überraschend ergibt die erfindungsgemäße Möglichkeit, das Klemmelement und den Schieberiegel zur Montage zu betätigen, die Möglichkeit der Wartung, so dass die Lebensdauer der Luftdüse wesentlich vergrößert ist. Entgegen den vorgeschlagenen Rastzungen wirkt das erfindungsgemäße Klemmelement formschlüssig. Die Federkraft wirkt der Klemmrichtung entgegen, und die Entnahme ist sicher verriegelt. Hierdurch ist sichergestellt, dass auch bei ungeschickter Handhabung keine Rastzungen abbrechen können.

Andersherum betrachtet kann die erforderliche Federkraft wesentlich geringer sein, denn sie muss nicht eine Fehlbedienung wie ein versehentliches Herausziehen der Düse verhindern. Die Düse ist praktisch formschlüssig durch die Klemmelemente fixiert.

Erfindungsgemäß besonders günstig ist es, dass dennoch eine nachträgliche Entnahme möglich ist. Die Klemmelemente sind and der radialen Außenseite des Innenrings abgestützt. Bei Entnahme des Innenrings folgt jedes Klemmelement seiner Federkraft und zieht sich nach innen zurück, so dass es die Klemmwirkung an der Lagerstelle automatisch aufgibt. Durch diese Konstruktion ist gewährleistet, dass der Klemmring stets dann sich im Eingriff ist, wenn dies an der Lagerstelle gewünscht ist, aber die Montage-und Demontage ohne Weiteres möglich ist.

In vorteilhafter Ausgestaltung ist ein besonderer Schieberiegel vorgesehen, der die Trennung von Innenring und Lagergehäuse ermöglicht. Der Schieberiegel weist bevorzugt eine Schlitzausnehmung auf, die beispielsweise mit einem Schraubenzieher betätigt werden kann. Durch die Betätigung lässt sich der Schieberiegel außer Eingriff des Lagergehäuses bringen, so dass die Verankerung zwischen Lagergehäuse und Innenring aufgehoben ist.

Bevorzugt dienen die Schieberiegel, von denen bevorzugt zwei vorgesehen sind, der Drehlagerung des Innenrings an dem Lagergehäuse, so dass eine zusätzliche Lagerung eingespart werden kann.

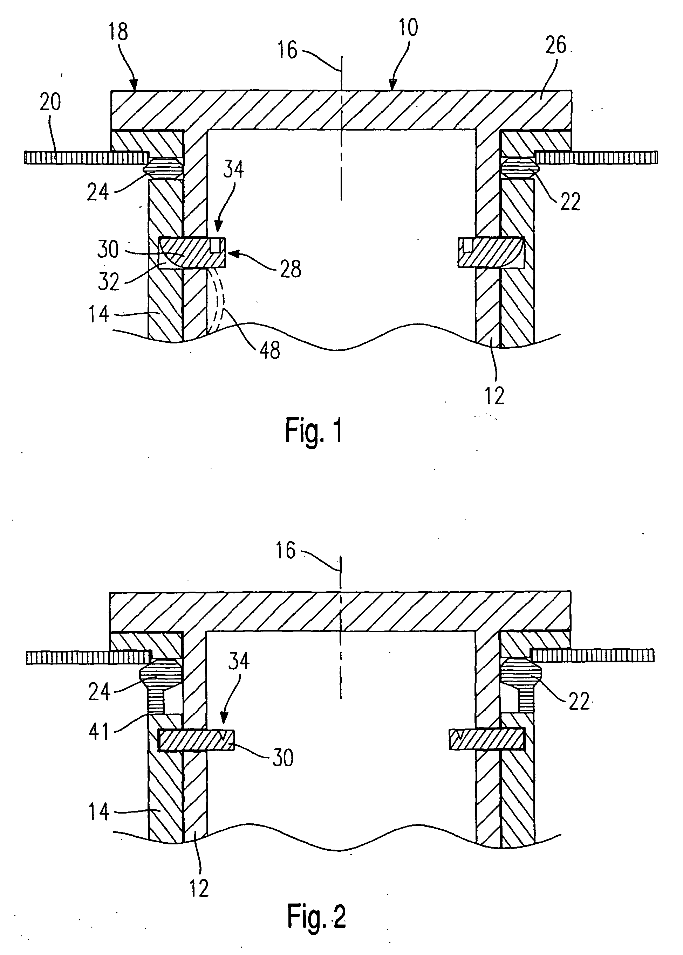

In vorteilhafter Ausgestaltung ist das Klemmelement gemäß Fig. 2 einstückig mit dem Lagergehäuse verbunden. Auch bei einer derartigen Lösung ist bei der Verwendung beispielweise von Kunststoff für das Lagergehäuse die erwünschte Federwirkung in an sich bekannter Weise realisierbar.

Erfindungsgemäß besonders günstig ist es, dass das Klemmelement in einer vergleichsweise engen und die volle radiale Stärke des Lagergehäuses ausnutzenden Ausnehmung geführt ist. Die Abstützung ist hierdurch mit ausreichender Sicherheit gegeben, wobei es sich versteht, dass es günstig ist, wenn das Spiel zwischen Lagergehäuse und Lagerstelle recht gering ist.

Weitere Vorteile, Einzelheiten und Merkmale ergeben sich aus der nachfolgenden Beschreibung mehrerer Ausführungsbeispiele anhand der Zeichnung.

### Es zeigen:

- Fig. 1: einen Schnitt durch einen Teil einer erfindungsgemäßen Rund-Luftdüse;
- Fig. 2: einen Schnitt durch eine weitere Ausführungsform einer erfindungsgemäßen Rund-Luftdüse;
- Fig. 3: eine vergrößerte Ansicht der Luftdüse gemäß Fig. 1; und
- Fig. 4: einen Schnitt durch die Rund-Luftdüse in der vorstehenden Ausführungsform, jedoch in einer anderen Schnittrichtung.

Die erfindungsgemäße Rund-Luftdüse 10 weist gemäß Fig. 1 einen Innenring 12 auf, der in einem Lagergehäuse 14 drehbar um eine Achse 16 gelagert ist. Der Innenring 12 trägt nicht dargestellte Lamellen seiner Stirnseite 18 benachbart. Die Lamellen sind in an sich bekannter Weise schwenkbar gelagert, wobei hinsichtlich der Einzelheiten der Lagerung und der Anordnung auf die DE-U 91 12 189, auf die vollinhaltlich Bezug genommen wird, zu verweisen ist.

Das Lagergehäuse 14 ist über seinen Flansch 49 an einer Lagerstelle 20 abgestützt, die Teil eines Fahrzeug-Innenraums ist. Im dargestellten Ausführungsbeispiel ist die betreffende Wand des Fahrzeugs eine Wand aus Stahlblech oder Aluminiumblech. Es versteht sich, dass anstelle dessen auch in gleicher Weise eine Wand aus Kunststoff, beispielweise am Armaturenbrett des betreffenden Fahrzeugs, verwendet werden kann, um die Lagerstelle 20 zu bilden, wobei die Wandstärke bei Kunststoffwänden regelmäßig größer ist als es in Fig. 1 dargestellt ist.

Erfindungsgemäß ist die Rund-Luftdüse 10 mit einem Klemmelement 22 und einem Klemmelement 24 sicher an der Lagerstelle 20 befestigt. Die Klemmelemente 22 und 24 hintergreifen den hinteren Umfangsrand der Lagerausnehmung, und die Lagerstelle 20 wird großflächig von einem Flansch 49 des Lagergehäuses 14 überdeckt, so dass der innere Umfangsrand zwischen dem Flansch 49 und den Klemmelementen 22 und 24 eingespannt gehalten ist.

Anstelle der hier vorgesehenen Darstellung ist es auch möglich, das Lagergehäuse 14 mit dem Flansch 49 auszustatten, und stattdessen den Innenring 12 mit einem Flansch zu versehen, der sich dann zwischen diesem Flansch 26 und der Lagerstelle 20 erstreckt.

Der Innenring 12 ist gemäß Fig. 1 recht spielarm in dem Lagergehäuse 14 gelagert. An seinem stirnseitigen Ende ist er von den Klemmelementen 22 und 24 abgestützt, wobei beide Klemmelemente, aufeinander zu, d.h. radial nach innen, federnd vorbelastet sind. Hierdurch ergibt sich eine zentrierte Führung für den Innenring 12.

Ferner weist der Innenring 12 eine Führungsausnehmung 28 für einen Schieberiegel 30 auf, der sich durch seine Wand hindurch erstreckt, und in eine entsprechend geformte Ausnehmung 32 in dem Lagergehäuse 14 eingreift. Die Ausnehmung 32 ist kreisringförmig ausgebildet, so dass sich der Schieberiegel beim Drehen des Innenrings 12 gegenüber dem Lagergehäuse 14 frei drehen kann.

Der Schieberiegel 30 ist nach radial außen federbelastet, wobei die Federn für die Klemmelemente 22 und 24 in Fig. 1 nicht dargestellt sind. Sie können in an sich bekannter Weise realisiert sein, also beispielsweise über entsprechend geformte einstückige Ausbildungen an dem Innenring 12 bzw. dem Lagergehäuse 14, oder wahlweise auch als Blattfedern aus Stahl'.

Aus Fig. 2 ist eine modifizierte Ausgestaltung der erfindungsgemäßen Rund-Luftdüse ersichtlich. Bei dieser Ausgestaltung sind die Klemmelemente 22 und 24 als entsprechende Teile des Lagergehäuses ausgebildet. Sie können sich einstückig erstrecken oder im Bereich einer Federzunge 41 befestigt sein, wobei bei der einstückigen Ausgestaltung sowohl die Klemmelemente 22 und 24 als auch das Lagergehäuse 14 aus Kunststoff bestehen können.

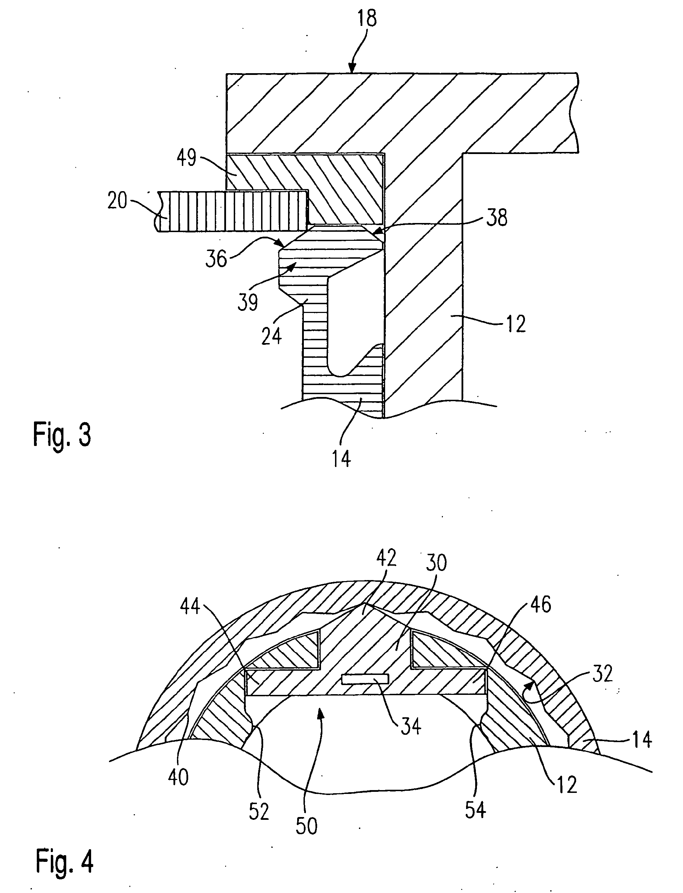

Der Schieberiegel 30 weist eine Schlitzausnehmung 34 auf, die sich dem Innendurchmesser des Innenrings 12 unmittelbar benachbart in ihn herein erstreckt. Die Schlitzausnehmung 34, die aus Fig. 4 ebenfalls ersichtlich ist, erlaubt es, über einen Schraubenzieher oder ein ähnliches Instrument den Schieberiegel nach radial einwärts zu bewegen und ihn damit außer Eingriff des Lagergehäuses 14 im Bereich der Ausnehmung 32 zu bringen. In diesem zurückgezogenen Zustand ist der Innenring 12 axial gegenüber dem Lagergehäuse 14 beweglich, so dass er entnommen werden kann. Die Entnahme des Innenrings 12 gibt wiederum die Klemmelemente 22 und 24 frei, die auf Grund ihrer Federbelastung nach innen springen, so dass auch das Lagergehäuse 14 - und damit die Düse 10 insgesamt - entnommen werden kann.

Die erfindungsgemäße Rund-Luftdüse weist in an sich bekannter Weise an dem Lagergehäuse 14 einen Anschluss für eine Luftleitung auf, beispielsweise einen Stutzen, der in Fig. 1 und 2 nicht dargestellt ist.

Aus Fig. 3 ist die Ausgestaltung des erfindungsgemäßen Klemmelements 24 besser ersichtlich. Das Klemmelement weist eine Klemmschräge 36 und eine Einführschräge 38 auf, die je am radial inneren bzw. radial äußeren Ende an der stirnseitigen Fläche des Klemmelements 24 angebracht sind. Die Einführschräge 38 dient der Erleichterung der Einführung des Innenrings 12 in das Lagergehäuse 14. Demgegenüber soll die Klemmschräge 36 zum Einen das Hintergreifen des Klemmelements 24 an der Lagerstelle 20 erleichtern, und zum Anderen die erwünschte Klemmwirkung ausüben, so dass die Klemmung sicher aufrechterhalten ist. Die Klemmelemente 22 und 24 sind in Durchtritts-Ausnehmungen 39 geführt.

Aus Fig. 4 ist ersichtlich, dass der Schieberiegel 30 in einer kreisringförmigen Ausnehmung 32 in dem Lagergehäuse 14 läuft. Die Ausnehmung 32 ist nicht als Durchtrittsausnehmung, sondern als nach innen offene kreisringförmige Vertiefung ausgebildet. Sie weist eine Zahnung 40 auf, die es ermöglicht, dass der Schieberiegel federbelastet Rastpositionen einnimmt, so dass hierdurch zugleich eine Rastung beim Drehen des Innenrings 12 in dem Lagergehäuse 14 möglich ist. Die Zahnung 40 ist recht schwach gehalten und weist bevorzugt Öffnungswinkel auf, die den Spitzenwinkel der Eingriffsspitze 42 des Schiebriegels 30 wesentlich übersteigen. Beispielsweise kann der Spitzenwinkel der Eingriffsspitze 42 120° betragen, und der Zahnungswinkel kann beispielweise 160° betragen. Diese Lösung erlaubt eine sanfte Rastung des Innenrings 12 bei der Drehung im Lagergehäuse. Es ist ersichtlich, dass die Führungsausnehmung 34 in dem Innenring 12 gestuft ausgebildet ist, um den in besonderer weise vorgesehenen Schieberiegel 30 aufzunehmen.

Der Schieberiegel 30 weist zwei Flügel 44 und 46 auf, die der seitlichen Abstützung dienen, so dass der Schieberiegel sich nicht beim Rotieren des Innenrings 12 verkantet. Wie es aus Fig. 4 ersichtlich ist, ist das Auftragsmaß des Schieberiegels 30 nach innen lediglich ganz gering, so dass die Luftströmung durch die Rund-Luftdüse 10 praktisch nicht beeinträchtigt wird. Über eine entsprechende Feder 48, die aus Fig. 1 ersichtlich ist, lässt sich die erforderliche Andruckkraft bereitstellen und zugleich eine Luftführung gewährleisten.

Der Schieberiegel 30 ist in dem Innenring in einer Ausnehmung 50 geführt, deren Form an die Form des Schieberiegels 30 angepasst ist. die Ausnehmung 50 weist seitlich kleine Nasen 52 und 54 auf, deren Reibwiderstand an den Hügeln 44 und 46 überwunden werden muss, wenn die Schieberiegel 30 zur Montage eingesetzt wird, während sie im Betrieb sogleich verhindern, dass der Schieberiegel 30 verloren gehen kann.

## Patentansprüche

1. Rund-Luftdüse für die Belüftung, Heizung und/oder Kühlung von Fahrzeugen, mit einem Innenring, in welchem Lamellen für die Steuerung des Luftstroms gelagert sind und in einem runden Lagergehäuse gelagert ist,
**dadurch gekennzeichnet, dass** ein Klemmelement (24) eine federnde Vorbelastung zur Innenseite, also zum Innenring (12), aufweist und in dem Lagergehäuse (14) abgestützt ist und bei eingesetztem Innenring (12) das Lagergehäuse (14) durchdringt und nach außen zum Festklemmen an einer zum Abstützen des Lagergehäuses (14) vorgesehenen Lagerstelle (20) vorspringt.

2. Rund-Luftdüse nach Anspruch 1,
**dadurch gekennzeichnet, dass** mindestens zwei gleiche im entsprechenden Teilkreis von 360° angeordnete Klemmelemente (22, 24) in dem Lagergehäuse (14) abgestützt sind und die Klemmelemente (22, 24) an dem Innenring (12) anliegen.

3. Rund-Luftdüse nach einem der vorhergehenden Ansprüche,
**dadurch gekennzeichnet, dass** das Klemmelement (24) eine Klemmschräge (36) zur Lagerstelle (20) hin weist.

4. Rund-Luftdüse nach einem der vorhergehenden Ansprüche,
**dadurch gekennzeichnet, dass** eine Einführschräge (38) des Klemmelements (24) zum Innenring (12) weist, mit welcher die Einführung des Innenrings (12) in den Außenring (14) erleichterbar ist.

5. Rund-Luftdüse nach einem der vorhergehenden Ansprüche,
**dadurch gekennzeichnet, dass** das Klemmelement (24) in einer sich radial erstreckenden Ausnehmung (39) im Lagergehäuse (14) geführt ist.

6. Rund-Luftdüse nach einem der vorhergehenden Ansprüche,
**dadurch gekennzeichnet, dass** ein Flansch des Lagergehäuses (14) an der Lagerstelle (20) abstützbar ist, welche ein Teil eines Fahrzeugs ist und derart ausgebildet ist, dass sie eine Lagerausnehmung bietet.

7. Rund-Luftdüse nach einem der vorhergehenden Ansprüche,
**dadurch gekennzeichnet, dass** der Flansch (49) des Lagergehäuses (14) die Lagerstelle (20) großflächig überdeckt, so dass ein innerer Umfangsrand der Lagerstelle (20) zwischen dem Flansch (49) und dem Klemmelement (24) eingespannt gehalten werden kann.

8. Rund-Luftdüse nach einem der vorhergehenden Ansprüche,
**dadurch gekennzeichnet, dass** das Klemmelement (24) außerhalb des Luftstromes der Luftdüse (10) angebracht ist.

9. Runddüse nach einem der vorhergehenden Ansprüche,
**dadurch gekennzeichnet, dass** ein nach außen belasteter Schieberiegel (30) in dem Innenring (12) gelagert ist, der beim Einsetzen des Innenrings (12) in das Lagergehäuse (14) einrastet, wobei der Innenring (12) in dem Lagergehäuse (14) drehbar gelagert ist.

10. Rund-Luftdüse nach Anspruch 9,
**dadurch gekennzeichnet, dass** der Schieberiegel (30) eine Hinterschneidung aufweist, über welche er von der Vorderseite der Rund-Luftdüse (10) zur erneuten Entnahme des Innenrings (12) zurückdrückbar und außer Eingriff des Lagergehäuses (14) bringbar ist.

11. Rund-Luftdüse nach Anspruch 9 oder 10,
**dadurch gekennzeichnet, dass** der Schieberiegel (30) eine Schlitzausnehmung (34) aufweist, mit welcher er von der Vorderseite der Rund-Luftdüse (10) zur erneuten Entnahme des Innenrings (12) zurückdrückbar und außer Eingriff des Lagergehäuses (14) bringbar ist.

12. Rund-Luftdüse nach Anspruch 9-11,
**dadurch gekennzeichnet, dass** der Schieberiegel (30) an dem Innenring (12) unverlierbar gelagert, insbesondere fest mit dem Innenring (12) vergossen ist.

13. Rund-Luftdüse nach Anspruch 9-12,
**dadurch gekennzeichnet, dass** der Schieberiegel (30) mit seiner Eingriffsspitze (42) einen Reibwiderstand für das Verdrehen des Innenrings (12) gegen das Lagergehäuse (14) bildet.

14. Rund-Luftdüse nach Anspruch 13,
**dadurch gekennzeichnet, dass** das Lagergehäuse (14) eine Rastung für die Eingriffsspitze (42) aufweist.

## Claims

1. Round air nozzle for the ventilation, heating and/or cooling of vehicles, with an inner ring, in which lamellas for controlling the air flow are mounted and are mounted in a round bearing housing **characterized in that** a clamping element (24) comprises a sprung preloading to the inner side, hence to the inner ring (12), and is supported in the bearing housing (14) and penetrates the bearing housing (14) with the inner ring (12) inserted and protrudes outwards for clamping on a bearing point (20) provided for supporting the bearing housing (14).

2. Round air nozzle according to claim 1, **characterised in that** at least two similar clamping elements (22, 24) arranged in the corresponding 360° reference circle are supported in the bearing housing (14) and the clamping elements (22, 24) rest against the inner ring (12).

3. Round air nozzle according to one the preceding claim, **characterised in that** the clamping element (24) points a clamping bevel (36) to the bearing point (20).

4. Round air nozzle according to one of the preceding claims, **characterised in that** a feed bevel (38) of the clamping element (24) points to the inner ring (12), with which feeding the inner ring (12) into the outer ring (14) can be facilitated.

5. Round air nozzle according to one of the preceding claims, **characterised in that** the clamping element (24) is guided in a radially extending recess (39) in the bearing housing (14).

6. Round air nozzle according to one the preceding claims, **characterised in that** a flange of the bearing housing (14) is supportable at the bearing point (20), which is a part of a vehicle and is configured in such a manner that it offers a bearing cavity.

7. Round air nozzle according to one of the preceding claims, **characterised in that** the flange (49) of the bearing housing (14) covers the bearing point (20) extensively, so that an inner peripheral edge of the bearing point (20) between the flange (49) and the clamping element (24) can be kept clamped.

8. Round air nozzle according to one the preceding claims, **characterised in that** the clamping element (24) is fixed outside of the air flow of the air nozzle (10).

9. Round nozzle according to one of the preceding claims, **characterised in that** an outwardly loaded sliding latch (30), is mounted in the inner ring (12), which engages when inserting the inner ring (12) into the bearing housing (14), where the inner ring (12) can be pivoted in the bearing housing (14).

10. Round air nozzle according to claim 9, **characterised in that** the sliding latch comprises an indentation, by means of which it can be pushed back from the front the round air nozzle (10) for removing the inner ring (12) again and can be disengaged from the bearing housing (14).

11. Round air duct according to claim 9 or 10, **characterised in that** the sliding latch (30) comprises a slot recess (34), by means of which it can be pushed back from the front the round air nozzle (10) for removing the inner ring (12) again, and can be disengaged from the bearing housing (14).

12. Round air nozzle according to claims 9-11 **characterized in that** the sliding latch (30) at the inner ring (12) is captively mounted, preferably sealed firmly with the inner ring (12).

13. Round air nozzle according to claims 9-12, **characterised in that** the sliding latch (30) forms a friction resistance with its engagement tip (42) for rotating the inner ring (12) against the bearing housing (14) .

14. Round air nozzle according to claim 13, **characterised in that** the bearing housing (14) comprises a latching for the engagement tip (42).

## Revendications

1. Buse d'air ronde pour la ventilation, le chauffage et/ou le refroidissement de véhicules, ayant une bague intérieure, dans lequel sont logées des lamelles pour commander la circulation d'air et qui est montée dans un boîtier de palier rond **caractérisée en ce qu'**un élément de serrage (24) présente une charge préliminaire vers la face intérieure, c'est-à-dire vers la bague intérieure (12), et est appuyé dans le boîtier de palier (14) et pénètre le boîtier de palier (14) à l'insertion de la bague intérieure (12) et saillit à l'extérieur pour caler sur un point de roulement (20) prévu pour soutenir le boîtier de palier (14).

2. Buse d'air ronde selon la revendication 1, **caractérisée en ce qu'**au moins deux éléments de serrage similaires (22, 24) disposés dans le cercle de référence de 360° correspondant sont appuyés dans le logement de roulement (14) et que les éléments de serrage (22, 24) se reposent contre la bague intérieure (12).

3. Buse d'air ronde selon l'une des revendications précédentes, **caractérisée en ce que** l'élément de serrage (24) dirige un biseau de serrage (36) au point de roulement (20).

4. Buse d'air ronde selon l'une des revendications précédentes, **caractérisée en ce qu'**un biseau d'insertion (38) de l'élément de serrage (24) pointe sur la bague intérieure (12), avec lequel l'insertion de la bague intérieure (12) dans l'anneau externe (14) peut être facilité.

5. Buse d'air ronde selon l'une des revendications précédentes, **caractérisée en ce que** l'élément de serrage (24) soit guidé dans une cavité qui s'étend radialement (39) dans le boîtier de palier (14).

6. Buse d'air ronde selon l'une des revendications précédentes, **caractérisée en ce qu'**une bride du boîtier de palier (14) puisse être supportée sur le point de roulement (20), qui est une pièce d'un véhicule et est configuré de façon qu'il offre une cavité de roulement.

7. Buse d'air ronde selon l'une des revendications précédentes, **caractérisée en ce que** la bride (49) du boîtier de palier (14) couvre le point de roulement (20) sur une grande surface, de sorte qu'un bord périphérique intérieur du point de roulement (20) entre la bride (49) et l'élément de serrage (24) puisse être maintenu.

8. Buse d'air ronde selon l'une des revendications précédentes, **caractérisée en ce que** l'élément de serrage (24) soit attaché à l'extérieur de la circulation d'air de la buse d'air (10).

9. Buse ronde selon l'une des revendications précédentes, **caractérisée en ce qu'**un verrou coulissant (30) chargé vers l'extérieur, soit logé dans la bague intérieure (12), qui s'engage dans le boîtier de palier (14) en insérant la bague intérieure (12), où la bague intérieure (12) est logée de façon orientable dans le boîtier de palier (14).

10. Buse d'air ronde selon la revendication 9, **caractérisée en ce que** le verrou coulissant présente une contre-dépouille, par l'intermédiaire de laquelle il peut être repoussé de la face avant de la buse d'air ronde (10) pour enlever la bague intérieure (12) à nouveau et peut être désengagé du boîtier de palier (14).

11. Le conduit d'air rond selon la revendication 9 ou 10, **caractérisée en ce que** le verrou coulissant (30) présente une cavité de rainure (34), avec laquelle il peut être repoussé de la face avant de la buse d'air ronde (10) pour enlever la bague intérieure (12) à nouveau et peut être désengagé du boîtier de palier (14).

12. Buse d'air ronde selon les revendications 9-11 **caractérisée en ce que** le verrou coulissant (30) soit logé imperdablement à la bague intérieure (12), de préférence scellé de façon inamovible à la bague intérieure (12).

13. Buse d'air ronde selon les revendications 9-12, **caractérisée en ce que** le verrou coulissant (30) avec sa pointe d'enclenchement (42) forme une résistance de frottement pour tordre la bague intérieure (12) contre le boîtier de palier (14).

14. Buse d'air ronde selon la revendication 13, **caractérisée en ce que** le logement de roulement (14) présente un crantage pour la pointe d'enclenchement (42).
